# EUROPÄISCHE PATENTSCHRIFT

(11) **EP 2 567 866 B1**
(45) Veröffentlichungstag und Bekanntmachung des Hinweises auf die Patenterteilung: **12.09.2018**
(21) Anmeldenummer: 12005228.7
(22) Anmeldetag: 17.07.2012
(51) Int. Cl.: B60Q 1/14

(54) **Verfahren zum Betreiben eines Scheinwerfers eines Kraftfahrzeugs**
Method for operating a headlight on a motor vehicle
Procédé destiné au fonctionnement d'un phare de véhicule automobile

(30) Priorität: 07.09.2011 DE 102011112716
(43) Veröffentlichungstag der Anmeldung: 13.03.2013
(73) Patentinhaber: AUDI AG, 85045 Ingolstadt (DE)
(72) Erfinder: Funk, Christian, 85080 Gaimersheim (DE); Siedersbeck, Alfons, 94560 Offenberg (DE)
(74) Vertreter: Thielmann, Frank

(56) Entgegenhaltungen:
- EP-A2- 1 512 579
- DE-A1-102004 014 900
- DE-U1-202004 010 950

## Beschreibung

Die vorliegende Erfindung betrifft ein Verfahren zum Betreiben eines Scheinwerfers eines Kraftfahrzeugs, der eine Mehrzahl von Leuchtmitteln umfasst. Überdies betrifft die vorliegende Erfindung ein Kraftfahrzeug.

Die Scheinwerfer für das Abblendlicht von Kraftfahrzeugen weisen eine vorgegebene Lichtverteilung auf, mit der die Fahrbahn ausgeleuchtet wird. Bei Kraftfahrzeugen, die für einen Rechtsverkehr bestimmt sind, ist die Lichtverteilung auf der linken Hälfte des Kraftfahrzeugs um ca. 1 % beschnitten. Diese Verteilung stellt einen Kompromiss für die unterschiedlichen Straßenklassen dar. Um zusätzlich die Sichtverhältnisse bei Nacht unter geeigneten Verkehrssituationen zu verbessern, ist es dem Fahrer möglich, die Fernlichtscheinwerfer zu aktivieren. Laut der Straßenverkehrsordnung sind die Fernlichtscheinwerfer in geschlossenen Ortschaften mit regelmäßiger Straßenbeleuchtung zu deaktivieren. Das Abschalten sowie das Aktivieren des Fernlichts erfolgt dabei üblicherweise ruckartig ohne Zwischenstufen.

Die DE 10 2009 025 678 A1 beschreibt eine Leuchtvorrichtung für ein Kraftfahrzeug, bei der die Lichtmenge einer Halbleiterlichtquelle geändert wird, um die Lichtverteilung einzustellen. Hierbei kann durch die zyklische Bewegung eines Spiegels zusammen mit den Ein- und Ausschalten der Halbleiterlichtquelle die Lichtverteilung vor dem Kraftfahrzeug entsprechend eingestellt werden.

Die DE 34 36 391 A1 beschreibt eine frontseitige Beleuchtungsanlage für ein Kraftfahrzeug, bei der die Gefahr der Blendung des Gegenverkehrs dadurch reduziert wird, dass beim Aktivieren des Fernlichts der Fernlichtscheinwerfer auf der linken Seite des Kraftfahrzeugs erst dann aktiviert wird, wenn ein entgegenkommendes Kraftfahrzeug nicht mehr geblendet werden kann. In einer Ausgestaltung ist hierbei auch die Intensität des Fernlichtscheinwerfers stufenlos einstellbar.

Aus der DE 10 2009 057 391 A1 ist ein Verfahren zur Fahrlichtsteuerung eines Fahrzeugs mit zumindest einem schwenkbaren Scheinwerfer bekannt. Hierbei wird die Verkehrssituation mit Hilfe eines Sensors erfasst und in Abhängigkeit von dem Sensorsignal die Lichtverteilung vor dem Kraftfahrzeug entsprechend eingestellt. Hierbei können die einzelnen Scheinwerfer des Kraftfahrzeugs unabhängig voneinander eingestellt und entsprechend verschwenkt werden, damit der Gegenverkehr nicht geblendet wird.

Die DE 10 2004 014 900 A1 beschreibt eine Scheinwerfereinrichtung für ein Fahrzeug, bei der eine Irisblende im Strahlengang zumindest eines Teils des von einer Lichtquelle emittierten Lichts angeordnet ist. Die Scheinwerfereinrichtung umfasst ferner eine Lichtsignaleinrichtung, die mehrere Leuchtdioden umfasst, die der Reihe nach und nacheinander ein- bzw. ausgeschaltet werden können.

Aus der EP 1 512 579 A2 ist ein Blinker für Fahrzeuge bekannt, mit dem automatisch ein Grad einer Drehung des Fahrzeugs angezeigt werden kann. Der Blinker kann mehrere Lampen umfassen, die entlang einer Erstreckungsrichtung des Blinkers aktiviert und deaktiviert werden können. Dabei kann die zeitliche Dauer zwischen aktivieren benachbarter Lampen in Abhängigkeit von der Geschwindigkeit des Kraftfahrzeugs verändert werden.

Zudem beschreibt die DE 20 2004 010 950 U1 einen Fahrzeugscheinwerfer mit Kurvenlicht, der Leuchtdioden als Lichtquellen umfasst, die in einem Array angeordnet sind. In Abhängigkeit von dem Lenkeinschlag werden die Leuchtdioden entsprechend angesteuert und/oder mit unterschiedlicher Leuchtstärke betrieben.

Bei modernen Kraftfahrzeugen werden zunehmend Scheinwerfer mit Leuchtdioden (LEDs) eingesetzt. Die Leuchtdioden zeichnen sich durch eine lange Lebensdauer, eine hohe Energieeffizienz und erweiterte Designmöglichkeiten aus. Die LED-Scheinwerfer können in mehrere Segmente unterteilt sein, welche jeweils üblicherweise mehrere Leuchtdioden umfassen. Die LED-Scheinwerfer können beispielsweise zum Bereitstellen einer Abblendlichtfunktion und einer Fernlichtfunktion genutzt werden.

Die Aufgabe der vorliegenden Erfindung ist es, die Funktionalität eines Scheinwerfers für ein Kraftfahrzeug zu erweitern, der eine Mehrzahl von Leuchtmitteln umfasst.

Diese Aufgabe wird erfindungsgemäß gelöst durch ein Verfahren gemäß Patentanspruch 1. Demnach wird bereitgestellt ein Verfahren zum Betreiben eines Scheinwerfers eines Kraftfahrzeugs, der eine Mehrzahl von Leuchtmitteln umfasst, die in zumindest einer Erstreckungsrichtung des Scheinwerfers nebeneinander angeordnet sind, wobei beim Einschalten des Scheinwerfers die Leuchtmittel entlang der zumindest einen Erstreckungsrichtung des Scheinwerfers der Reihe nach eingeschaltet werden und wobei die Leuchtdichte der jeweiligen Leuchtmittel beim Einschalten kontinuierlich erhöht und beim Abschalten kontinuierlich reduziert wird und das Einschalten und das Abschalten des Scheinwerfers in Abhängigkeit von erfassten Daten zumindest eines Umfeldsensors automatisch gesteuert wird.

Somit entsteht beim Einschalten des Scheinwerfers des Kraftfahrzeugs ein kontinuierlicher Übergang der Lichtverteilung vor dem Kraftfahrzeug. Daher ergeben sich keine abrupten Änderungen der Lichtverteilung vor dem Kraftfahrzeug, die den Fahrer oder andere Verkehrsteilnehmer verunsichern könnten. Das kontinuierliche Einschalten der einzelnen Leuchtmittel des Scheinwerfers kann somit zur Sicherheit im Straßenverkehr beitragen. Überdies entsteht durch die weichen Umschaltvorgänge ein hochwertiger Eindruck von dem Lichtsystem des Kraftfahrzeugs.

Die Leuchtdichte der jeweiligen Leuchtmittel wird beim Einschalten kontinuierlich erhöht und beim Abschalten kontinuierlich reduziert. Das Ein- bzw. Ausschalten der jeweiligen Leuchtmittel erfolgt bevorzugt nicht abrupt sondern gedimmt. Somit kann ein besonders weicher und harmonischer Übergang der durch die Leuchtmittel erzeugten Leuchtdichte erreicht werden. Dies bewirkt wiederum, dass sich die Lichtverteilung vor dem Kraftfahrzeug kontinuierlich ändert und somit ein besonders hochwertiger Eindruck von dem Scheinwerfer bzw. der Lichtanlage des Kraftfahrzeugs entsteht.

Das Einschalten und das Abschalten des Scheinwerfers wird in Abhängigkeit von erfassten Daten zumindest eines Umfeldsensors automatisch gesteuert. Hierbei kann beispielsweise mit einem entsprechenden Umfeldsensor festgestellt werden, ob sich das Kraftfahrzeug innerhalb einer geschlossenen Ortschaft befindet oder nicht. Zu diesem Zweck kann beispielsweise ein entsprechendes Fahrerassistenzsystem oder ein Navigationssystem verwendet werden. Ebenso kann das Vorhandensein einer Straßenbeleuchtung mit Hilfe eines Umfeldsensors bestimmt werden. So kann beispielsweise beim Verlassen einer geschlossenen Ortschaft das Fernlicht automatisch aktiviert werden. Ebenso kann das Fernlicht bei einer regelmäßigen Straßenbeleuchtung deaktiviert werden. Das Fernlicht kann auch automatisch abgeschaltet werden, wenn entgegenkommende Verkehrersteilnehmer erfasst werden. Überdies können entsprechende Daten von anderen Kraftfahrzeugen empfangen werden, in Abhängigkeit derer die Schweinwerfer bzw. die Leuchtmittel der Scheinwerfer eingeschaltet bzw. ausgeschaltet werden.

Bevorzugt werden beim Abschalten des Scheinwerfers die Leuchtmittel entlang der zumindest einen Erstreckungsrichtung des Scheinwerfers der Reihe nach abgeschaltet. Auch beim Abschalten eines der Scheinwerfer des Kraftfahrzeugs erfolgt keine abrupte Änderung der Lichtverteilung vor dem Kraftfahrzeug. Dies kann auch zur Sicherheit im Straßenverkehr beigetragen. Des Weiteren ergibt sich auch hier ein hochwertiger Eindruck von der Lichtanlage des Kraftfahrzeugs.

Ein solcher Scheinwerfer kann beispielsweise als Abblendlichtscheinwerfer, als Fernlichtscheinwerfer, als Standlichtscheinwerfer, als Tagfalllichtscheinwerfer, als Rücklichtscheinwerfer, als Bremslichtscheinwerfer oder dergleichen verwendet werden. Ein Scheinwerfer umfasst üblicherweise eine Mehrzahl von Leuchtmitteln, die in einer Matrixanordnung in dem Scheinwerfer angeordnet sind.

In einer bevorzugten Ausführungsform werden beim Einschalten bzw. beim Abschalten des Scheinwerfers die nebeneinander angeordneten Leuchtmittel entlang einer horizontalen Erstreckungsrichtung und/oder einer vertikalen Erstreckungsrichtung und/oder einer diagonal verlaufenden Erstreckungsrichtung des Scheinwerfers der Reihe nach eingeschaltet bzw. abgeschaltet. Ein Scheinwerfer für ein Kraftfahrzeug umfasst üblicherweise eine Mehrzahl von Leuchtmitteln, die entweder in horizontaler und/oder vertikaler Erstreckung des Scheinwerfers angeordnet sind. Die einzelnen Leuchtmittel des Scheinwerfers können beim Einschalten bzw. beim Ausschalten des Scheinwerfers der Reihe nach aktiviert bzw. deaktiviert werden. Dies kann beispielsweise entlang der vertikalen, der horizontalen oder einer diagonal dazu verlaufenden Erstreckungsrichtung des Scheinwerfers erfolgen. So können beispielsweise beim Einschalten des Scheinwerfers die einzelnen Leuchtmittel entlang einer der Erstreckungsrichtungen zugeschaltet werden, und beim Abschalten des Scheinwerfers die einzelnen Leuchtmittel in der entgegengesetzten Richtung abgeschalten werden. Auf diese Weise ergibt sich ein Effekt, der von einem Theatervorhang bekannt ist, der entsprechend auf- und zugezogen wird. Somit ergibt sich eine besonders gleichmäßige Änderung der Lichtverteilung von dem Kraftfahrzeug.

In einer weiteren Ausgestaltung wird die zeitliche Dauer zwischen dem Einschalten bzw. dem Abschalten nebeneinander angeordneter Leuchtmittel verändert. Die zeitliche Dauer zwischen dem Ein- bzw. Abschalten der einzelnen Leuchtmittel, die nebeneinander angeordnet sind, kann entsprechend angepasst werden. Bevorzugt erfolgt das Ein- bzw. Abschalten benachbarter Leuchtmittel in zeitlichen gleichen Abstand. Ebenso kann sich der zeitliche Abstand zwischen dem Ein- und dem Abschalten der einzelnen Leuchtmittel entlang einer Erstreckungsrichtung des Scheinwerfers während des Ein- bzw. Abschaltvorgangs des Scheinwerfers ändern. Auf diese Weise kann das Ein- bzw. Abschalten des Scheinwerfers des Kraftfahrzeugs besonders effektiv an die Umgebungsverhältnisse, an das Fahrverhalten oder den Wunsch des Fahrers angepasst werden.

Bevorzugt wird die zeitliche Dauer zwischen dem Einschalten bzw. dem Abschalten nebeneinander angeordneter Leuchtmittel in Abhängigkeit von einer Geschwindigkeit und/oder einer Beschleunigung des Kraftfahrzeugs verändert. So kann beispielsweise der zeitliche Abstand zwischen dem Einschalten bzw. Abschalten nebeneinander angeordneter Leuchtmittel mit zunehmender Geschwindigkeit bzw. Beschleunigung des Kraftfahrzeugs verringert werden. Ebenso kann bei einer niedrigen Geschwindigkeit des Kraftfahrzeugs der zeitliche Abstand vergrößert werden. Somit kann das Einschalten bzw. Abschalten des Scheinwerfers besonders genau an das Verhalten des Fahrers angepasst werden.

Hierbei ist es auch vorgesehen, dass beim Einschalten des Scheinwerfers einzelne der Leuchtmittel nicht eingeschaltet werden. Ebenso können auch nur ausgewählte Leuchtmittel aktiviert werden. Auf diese Weise kann beispielsweise Lichtverteilung vor dem Kraftfahrzeug besonders exakt an die Straßenverhältnisse angepasst werden. Auf diese Weise kann beispielsweise ein adaptives Kurvenlicht bereitgestellt werden. Ebenso können die einzelnen Leuchtmittel des Scheinwerfers in Abhängigkeit von den Straßenverhältnissen, den Witterungsverhältnissen oder dergleichen eingestellt werden.

Hierbei kann ebenso zwischen einer geschlossenen Ortschaft, einer Landstraße oder einer Autobahn unterschieden werden.

Überdies wird erfindungsgemäß bereitgestellt ein Kraftfahrzeug mit zumindest einem Scheinwerfer, der eine Mehrzahl von Leuchtmittel umfasst, die in zumindest einer Erstreckungsrichtung des Scheinwerfers nebeneinander angeordnet sind, und einer Steuereinrichtung, die dazu ausgebildet ist, die Leuchtmittel einzeln anzusteuern und beim Einschalten und/oder Abschalten des Scheinwerfers die Leuchtmittel entlang der zumindest einen Erstreckungsrichtung des Scheinwerfers der Reihe nach einzuschalten bzw. abzuschalten, wobei die Steuereinrichtung dazu ausgebildet ist, die Leuchtdichte der jeweiligen Leuchtmittel beim Einschalten kontinuierlich zu erhöhen und beim Abschalten kontinuierlich zu reduzieren und das Einschalten und das Abschalten des Scheinwerfers in Abhängigkeit von erfassten Daten zumindest eines Umfeldsensors automatisch zu steuern.

Die vorliegend im Zusammenhang mit dem erfindungsgemäßen Verfahren beschriebenen Weiterbildungen lassen sich ebenso auf das erfindungsgemäße Kraftfahrzeug übertragen.

Der Scheinwerfer des Kraftfahrzeugs kann beispielsweise ein Fernlichtscheinwerfer sein. So kann das Zu- bzw. Abschalten des Fernlichtscheinwerfers so erfolgen, dass die einzelnen Leuchtmittel des Fernlichtscheinwerfers der Reihe nach entlang einer Erstreckungsrichtung des Scheinwerfers ein- bzw. abgeschaltet werden. Um mit dem Fernlichtscheinwerfer eine Funktionalität einer Lichthupe zu ermöglichen, kann es beispielsweise vorgesehen sein, dass hierbei alle Leuchtmittel gleichzeitig eingeschaltet und ausgeschaltet werden.
Des Weiteren können mit den Scheinwerfern des Kraftfahrzeugs verschiedene Lichtverteilungen, wie z. B. ein Stadtlicht, ein Ladestraßenlicht, ein Autobahnlicht, ein Kreuzungslicht, ein Abbiegelicht oder dergleichen bereitgestellt werden. Dabei können die jeweils dazu verwendeten Leuchtmittel der Scheinwerfer des Kraftfahrzeugs bei Ein- bzw. Abschalten der entsprechenden Lichtverteilung entlang einer Erstreckungsrichtung ein- bzw. abgeschaltet werden.

Bevorzugt sind die Leuchtmittel des Scheinwerfers des Kraftfahrzeugs Leuchtdioden. Hierbei werden üblicherweise Leuchtdioden verwendet, die ein weißes Licht erzeugen und die für den Betrieb in einen Frontscheinwerfer des Kraftfahrzeugs eingesetzt werden können. Ebenso können für die hinteren Scheinwerfer bzw. Bremsleuchten entsprechende rote Leuchtdioden verwendet werden. Leuchtdioden zeichnen sich durch eine lange Lebensdauer und ihre Energieeffizienz aus.

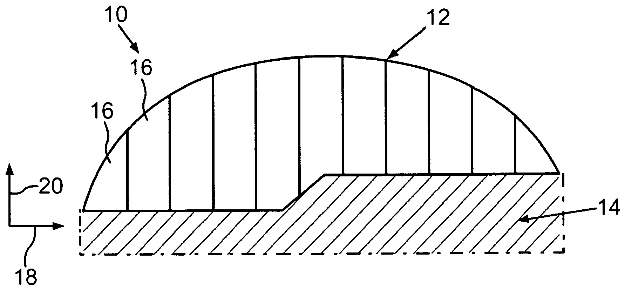

Die vorliegende Erfindung wird nun anhand der beigefügten Zeichnung näher erläutert. Dabei zeigt die Figur eine schematische Darstellung eines Scheinwerfers für ein Kraftfahrzeug.

Das nachfolgend näher geschilderte Ausführungsbeispiel stellt eine bevorzugte Ausführungsform der vorliegenden Erfindung dar.

Die Figur zeigt in einer schematischen Darstellung die Draufsicht eines Scheinwerfers 10 für ein Kraftfahrzeug. Der Scheinwerfer 10 umfasst einen Fernlichtscheinwerfer 12 und einen Abblendlichtscheinwerfer. In der Figur ist nur der Fernlichtscheinwerfer 12 dargestellt. Die Position des Abblendlichtscheinwerfers ist durch den schraffierten Bereich 14 verdeutlicht. Vorliegend erfolgt nur eine Beschreibung des Fernlichtscheinwerfers 12. Dies kann in ebensolcher Weise auf dem Abblendlichtscheinwerfer, oder einen anderen Scheinwerfer des Kraftfahrzeugs, wie einen Tagfahrlichtscheinwerfer, einen Bremslichtscheinwerfer, einen Rücklichtscheinwerfer, einen Fahrtrichtungsanzeiger oder dergleichen übertragen werden.

Der Scheinwerfer 10 ist in mehrere Segmente 16 unterteilt. Vorliegend umfasst der Scheinwerfer 10 beispielhaft zehn Segmente 16. Die Segmente 16 sind hier beispielhaft entlang einer ersten Erstreckungsrichtung 18 des Scheinwerfers 10 verteilt angeordnet. Die erste Erstreckungsrichtung 18 entspricht hier der horizontalen Erstreckungsrichtung 18 des Scheinwerfers 10. Ebenso kann jede andere Erstreckungsrichtung des Scheinwerfers angenommen werden. Jedes der Segmente 16 umfasst ein oder mehrere hier nicht dargestellte Leuchtmittel. Die Leuchtmittel sind bevorzugt Leuchtdioden, insbesondere weiße Leuchtdioden. Die Mehrzahl von Leuchtmitteln ist in dem Scheinwerfer 10 üblicherweise in einer Matrix angeordnet. Die Matrix weist eine erste Ersteckungsrichtung 18 und eine dazu senkrechte, zweite Erstreckungsrichtung 20 auf. Die einzelnen Leuchtmittel können entweder entlang der ersten Erstreckungsrichtung 18 oder entlang der zweiten Erstreckungsrichtung 20 angeordnet sein. Bevorzugt sind jeweils mindestens zwei der Leuchtmittel in der ersten Erstreckungsrichtung 18 und in der zweiten Erstreckungsrichtung 20 nebeneinander angeordnet, so dass sich in den Scheinwerfer 10 eine zweidimensionale Anordnung der Leuchtmittel ergibt. Beim Einschalten des Scheinwerfers 10 werden die einzelnen Leuchtmittel entlang der zumindest einen Erstreckungsrichtung 18, 20 des Scheinwerfers 10 der Reihe nach eingeschaltet. Dies kann beispielsweise entlang der ersten Erstreckungsrichtung 18 erfolgen. Hierbei können entweder die einzelnen Leuchtmittel entlang der ersten Erstreckungsrichtung 18 der Reihe nach eingeschaltet werden. Ebenso ist es denkbar, dass die einzelnen Leuchtmittel in einem Segment gleichzeitig eingeschaltet werden und die einzelnen Segmente der Reihe nach entlang der Erstreckungsrichtung 18 eingeschaltet werden. Ebenso können die einzelnen Leuchtmittel entlang der Erstreckungsrichtung 20 eingeschaltet werden. Überdies können die einzelnen Leuchtmittel entlang einer zur Erstreckungsrichtung 18 und 20 diagonalen Erstreckungsrichtung eingeschaltet werden.

Beim Abschalten des Scheinwerfers werden die einzelnen Leuchtmittel entlang einer Erstreckungsrichtung 18, 20 des Scheinwerfers 10 der Reihe nach abgeschaltet. Können die einzelnen Leuchtmittel beispielsweise in der Darstellung von links nach rechts eingeschaltet werden und von rechts nach links wieder ausgeschaltet werden. Hierbei ist ebenso jede andere Richtung entlang verschiedener Erstreckungsrichtungen denkbar.

Das Ein- bzw. Ausschalten der Leuchtmittel erfolgt bevorzugt nicht abrupt sondern kontinuierlich bzw. gedimmt. Somit verändert sich die Lichtverteilung vor dem Kraftfahrzeug nicht abrupt. Der Fahrer oder andere Verkehrsteilnehmer werden dadurch nicht verunsichert oder gestört. Zudem gibt sich durch die hier beschriebene Ansteuerung der einzelnen Leuchtmittel des Scheinwerfers 10 ein besonders hochwertiger und begehrlicher Eindruck von der Lichtanlage des Kraftfahrzeugs.

Das Einschalten und das Ausschalten des Scheinwerfers 10 ist in Abhängigkeit von den erfassten Daten zumindest eines Umfeldsensors des Kraftfahrzeugs automatisch gesteuert. Hierbei kann beispielsweise entsprechende Straßenbeleuchtung erfasst werden. Ebenso kann der Zustand der Straße oder die Witterungsverhältnisse erfasst werden. Überdies kann festgestellt werden, ob sich das Kraftfahrzeug in einer geschlossenen Ortschaft, auf einer Landstraße oder auf einer Autobahn befindet.

Ebenso kann die zeitliche Dauer zwischen dem Einschalten bzw. dem Abschalten nebeneinander angeordneter Leuchtmittel des Scheinwerfers 10 verändert werden. Das Einschalten bzw. das Abschalten der einzelnen Leuchtmittel kann in zeitlich gleichen Abständen erfolgen. Ebenso können diese zeitlichen Abstände variiert werden. Überdies die zeitliche Dauer zwischen dem Einschalten bzw. dem Abschalten nebeneinander angeordneter Leuchtmittel in Abhängigkeit von einer Geschwindigkeit und/oder einer Beschleunigung des Kraftfahrzeugs verändert werden. Somit kann die von dem Scheinwerfer 10 erzeugte Lichtverteilung von dem Kraftfahrzeug besonders effektiv das Fahrverhalten des Fahrers, die Umgebungsbedingungen und die äußeren Einflüsse angepasst werden.

## Patentansprüche

1. Verfahren zum Betreiben eines Scheinwerfers (10) eines Kraftfahrzeugs, der eine Mehrzahl von Leuchtmitteln umfasst, die in zumindest einer Erstreckungsrichtung (18, 20) des Scheinwerfers (10) nebeneinander angeordnet sind, wobei
- beim Einschalten des Scheinwerfers (10) die Leuchtmittel entlang der zumindest einen Erstreckungsrichtung (18, 20) des Scheinwerfer (10) der Reihe nach eingeschaltet werden,
**dadurch gekennzeichnet, dass**
- die Leuchtdichte der jeweiligen Leuchtmittel beim Einschalten kontinuierlich erhöht und beim Abschalten kontinuierlich reduziert wird und
- das Einschalten und das Abschalten des Scheinwerfers (10) in Abhängigkeit von erfassten Daten zumindest eines Umfeldsensors automatisch gesteuert wird.

2. Verfahren nach Anspruch 1,
**dadurch gekennzeichnet, dass**
beim Abschalten des Scheinwerfers (10) die Leuchtmittel entlang der zumindest einen Erstreckungsrichtung (18, 20) des Scheinwerfer (10) der Reihe nach abgeschaltet werden.

3. Verfahren nach Anspruch 1 oder 2,
**dadurch gekennzeichnet, dass**
beim Einschalten bzw. beim Abschalten des Scheinwerfers (10) die nebeneinander angeordneten Leuchtmittel entlang einer horizontalen Erstreckungsrichtung (18) und/oder einer vertikalen Erstreckungsrichtung (20) und/oder einer diagonal verlaufenden Erstreckungsrichtung des Scheinwerfers der Reihe nach eingeschaltet bzw. abgeschaltet werden.

4. Verfahren nach einem der vorhergehenden Ansprüche,
**dadurch gekennzeichnet, dass**
die zeitliche Dauer zwischen dem Einschalten bzw. dem Abschalten nebeneinander angeordneter Leuchtmittel verändert wird.

5. Verfahren nach Anspruch 4,
**dadurch gekennzeichnet, dass**
die zeitliche Dauer zwischen dem Einschalten bzw. dem Abschalten nebeneinander angeordneter Leuchtmittel in Abhängigkeit von einer Geschwindigkeit und/oder einer Beschleunigung des Kraftfahrzeugs verändert wird.

6. Kraftfahrzeug, mit
- zumindest einem Scheinwerfer (10), der eine Mehrzahl von Leuchtmitteln umfasst, die in zumindest einer Erstreckungsrichtung (18, 20) des Scheinwerfers nebeneinander angeordnet sind, und
- einer Steuereinrichtung, die dazu ausgebildet ist, die Leuchtmittel einzeln anzusteuern und beim Einschalten und/oder Abschalten des Scheinwerfers (10) die Leuchtmittel entlang der zumindest einen Erstreckungsrichtung (18, 20) des Scheinwerfers der Reihe nach (10) einzuschalten bzw. abzuschalten,
**dadurch gekennzeichnet, dass**
- die Steuereinrichtung dazu ausgebildet ist, die Leuchtdichte der jeweiligen Leuchtmittel beim Einschalten kontinuierlich zu erhöhen und beim Abschalten kontinuierlich zu reduzieren und das Einschalten und das Abschalten des Scheinwerfers (10) in Abhängigkeit von erfassten Daten zumindest eines Umfeldsensors automatisch zu steuern.

7. Kraftfahrzeug nach Anspruch 6,
**dadurch gekennzeichnet, dass**
die Leuchtmittel des Scheinwerfers (10) Leuchtdioden sind.

## Claims

1. Method for operating a headlight (10) of a motor vehicle, which comprises multiple luminescent mediums, which are arranged side by side in at least one extension direction (18, 20) of the headlight (10), wherein
- when switching on the headlight (10) the luminescent mediums along the at least one extension direction (18, 20) of the headlight (10) are switched on in sequence,
**characterized in that**
- the luminance of the respective luminescent mediums is continuously increased when switching on and continuously reduced when switching off, and
- the switching on and off of the headlight (10) is automatically controlled in response to detected data of at least one environment sensor.

2. Method according to claim 1, **characterized in that** when switching off the headlight (10) the luminescent mediums along the at least one extension direction (18, 20) of the headlight (10) are switched off in sequence.

3. A method according to claim 1 or 2, **characterized in that** when switching on or when switching off the headlight (10) the side by side arranged luminescent mediums are switched on or off in sequence along a horizontal extension direction (18) and/or a vertical extension direction (20) and/or a diagonal extension direction of the headlight.

4. Method according to any of the preceding claims, **characterized in that** the time duration between switching on and off the luminescent mediums arranged side by side is changed.

5. A method according to claim 4, **characterized in that** the time duration between switching on and switching off luminescent mediums arranged side by side is changed in response to a speed and/or acceleration of the motor vehicle.

6. Motor vehicle, with
- at least one headlight (10) comprising multiple luminescent mediums, which are arranged side by side in at least one extension direction (18, 20) of the headlight, and
- a control device which is designed to control the luminescent mediums individually so that on switching on and/or switching off the headlight (10), the luminescent mediums are switched on or switched off in sequence along the at least one extension direction (18, 20) of the headlight (10), **characterized in that**
- the control device is adapted to continuously increase the luminance of the respective luminescent medium when switching on and to reduce it continuously when switching off, and automatically control the switching on and off of the headlight (10) in response to detected data from at least one environment sensor.

7. Motor vehicle according to claim 6, **characterized in that** the luminescent mediums of the headlight (10) are light-emitting diodes.

## Revendications

1. Procédé destiné au fonctionnement d'un phare (10) d'un véhicule automobile qui comporte une pluralité de moyens d'éclairage qui sont disposés dans au moins un sens d'étirement (18, 20) du phare (10) les uns à côté des autres, dans lequel
- lors de l'allumage du phare (10) les moyens d'éclairage sont allumés le long d'au moins un sens d'étirement (18, 20) du phare (10) les uns après les autres,
**caractérisé en ce que**
- la luminance des moyens d'éclairage respectifs est augmentée en continu lors de l'allumage et réduite en continu lors de l'extinction et
- l'allumage et l'extinction du phare (10) sont automatiquement commandés en fonction des données détectées au moins d'un capteur environnemental.

2. Procédé selon la revendication 1,
**caractérisé en ce que**
lors de l'extinction du phare (10) les moyens d'éclairage sont éteints le long d'au moins un sens d'étirement (18, 20) du phare (10) les uns après les autres.

3. Procédé selon la revendication 1 ou 2,
**caractérisé en ce que**
lors de l'allumage ou lors de l'extinction du phare (10) les moyens d'éclairage disposés les uns à côté des autres sont allumés ou éteints le long d'un sens d'étirement horizontal (18) et/ou un sens d'étirement vertical (20) et/ou un sens d'étirement s'étendant en diagonale du phare les uns après les autres.

4. Procédé selon l'une quelconque des revendications précédentes,
**caractérisé en ce que**
la durée entre l'allumage ou l'extinction des moyens d'éclairage disposés les uns à côté des autres est modifiée.

5. Procédé selon la revendication 4,
**caractérisé en ce que**
la durée entre l'allumage ou l'extinction des moyens d'éclairage disposés les uns à côté des autres est modifiée en fonction d'une vitesse et/ou d'une accélération du véhicule automobile.

6. Véhicule automobile avec
- au moins un phare (10) qui comporte une pluralité de moyens d'éclairage qui sont disposés dans au moins un sens d'étirement (18, 20) du phare les uns à côté des autres, et
- un dispositif de commande qui est réalisé afin de commander individuellement les moyens d'éclairage et lors de l'allumage et/ou de l'extinction du phare (10) d'allumer ou d'éteindre les moyens d'éclairage le long d'au moins un sens d'étirement (18, 20) du phare (10) les uns après les autres,
**caractérisé en ce que**
- le dispositif de commande est réalisé afin d'augmenter en continu la luminance des moyens d'éclairage respectifs lors de l'allumage et de la réduire en continu lors de l'extinction et de commander automatiquement l'allumage et l'extinction du phare (10) en fonction des données détectées au moins d'un capteur environnemental.

7. Véhicule automobile selon la revendication 6,
**caractérisé en ce que**
les moyens d'éclairage du phare (10) sont des diodes électroluminescentes.
